# EUROPÄISCHE PATENTANMELDUNG

(11) **EP 4 101 732 A1**
(43) Veröffentlichungstag der Anmeldung: **14.12.2022**
(21) Anmeldenummer: 22171360.5
(22) Anmeldetag: 03.05.2022
(51) Int. Cl.: B62B 5/00, B62B 5/04, B62B 3/16

(54) **LADUNGSTRÄGER**

(30) Priorität: 10.06.2021 DE 102021115057
(71) Anmelder: IPP GmbH, 58256 Ennepetal (DE)
(72) Erfinder: de Greef, Peter, 7701CN Dedemsvaart (NL)
(74) Vertreter: Roche, von Westernhagen & Ehresmann

(57) **Zusammenfassung**

Die Erfindung betrifft unter anderem einen Ladungsträger (10) zum Transport und/oder zur Aufbewahrung von Gütern, insbesondere in Form einer Dolly, umfassend ein aus Kunststoff bestehendes Deck (11), an dessen Oberseite (12) eine Auflagefläche (13) für die Güter oder für eine Einrichtung zur Aufnahme der Güter bereitgestellt ist, und an dessen Unterseite (14) eine Mehrzahl von Rollen (15a, 15b, 15c, 15d) angeordnet ist. Die Besonderheit besteht unter anderem darin, dass sich von der Unterseite (14) des Decks (11) wenigstens ein Gehäuse (31a, 31b) für eine Rolle (17a, 17b) weg erstreckt, das ein Lager (46a, 46b) zur Halterung der Rolle (17a, 17b) ausbildet, und das die Rolle (17a, 17b) im montierten Zustand zumindest teilweise überfängt.

## Beschreibung

Die Erfindung betrifft einen Ladungsträger nach dem Oberbegriff des Anspruches 1.

Die Anmelderin gehört zu den führenden Unternehmen Europas im Bereich der Bereitstellung von tauschbaren Ladungsträgern, die in sogenannten Pools vorgehalten werden. Insbesondere werden von der Anmelderin Paletten, beispielsweise Halbpaletten und Viertelpaletten zum Tausch bereitgestellt.

Die Anmelderin hat Ladungsträger seit geraumer Zeit entwickelt und umfangreich eingesetzt, wie sie beispielsweise in der DE 10 2011 003 999 A1 beschrieben sind. Bei einer solchen Palette sind insbesondere Abmessungen einer Viertelpalette vorgesehen, so dass vier nebeneinander gestellte und zu einem Rechteck konfigurierte Viertelpaletten die Maße einer Standard-Europalette (80 cm x 120 cm) ergeben. Demzufolge besitzt eine Viertelpalette Abmessungen mit einer Länge von 60 cm und einer Breite von 40 cm.

Der vorbekannte Ladungsträger der eingangs beschriebenen Art besteht aus Kunststoff und ist als Kunststoffspritzgussteil hergestellt. An der Oberseite stellt der bekannte Ladungsträger eine Auflagefläche für die Güter bereit. Hier können die Güter, z. B. Displaywaren, also beispielsweise auf einem Kartonagesockel aufgestellte Kartonagetrays mit Aktionsware befüllt, aufgestellt werden. Die bekannte Viertelpalette fügt sich gut in bestehende Logistiksysteme ein.

Der bekannte Ladungsträger weist vier eckseitig angeordnete, ebenfalls aus Kunststoff mit angespritzte Füße auf. Die Füße sind voneinander beabstandet und können von Flurförderfahrzeugen, z. B. von einem Gabelstapler, untergriffen werden, und nach dem Anheben einfach transportiert werden.

Alternativ zu der Anordnung von festen Füßen ist es bekannt, bei Ladungsträgern Rollen vorzusehen. Hierzu können beispielsweise vier Rollen vorgesehen sein, so dass im Eckbereich des Ladungsträgers jeweils eine Rolle angebracht ist.

Beispielsweise können zwei feststehende Rollen und zwei lenkbare Rollen vorgesehen sein. Die lenkbare Rolle kann z. B. einen Hebel aufweisen. Dieser ist auch als Bremshebel oder Feststellhebel bezeichenbar, und erlaubt eine Betätigung per Fuß. Durch einmaliges Treten auf den Hebel kann die Bremse, insbesondere die Rolle, festgestellt werden, und z. B. in ihrer Orientierung und/oder in Laufrichtung, festgestellt werden. Eine weitere Betätigung des Hebels, entlang derselben Richtung, oder entlang einer entgegengesetzten Richtung, kann zu einem Lösen der Sperre oder der Bremse führen.

Bei dem eingangs beschriebenen, durch eine offenkundige Vorbenutzung bekannt gewordenen, druckschriftlich nicht belegbaren Ladungsträger sind an der Unterseite des Decks vier Rollen angeordnet, und jeweils über eine eigene Befestigungsplatte mit der Unterseite verschraubt. Die Rollen werden als vorgefertigte Baueinheiten bereitgestellt. In dem Kunststoffdeck sind zum Festlegung der Befestigungsplatte Anschraublöcher vorgesehen.

Hiervon ausgehend liegt die Aufgabe der Erfindung darin, den bekannt gewordenen Ladungsträger mit den Merkmalen des Oberbegriffes des Anspruches 1 derartig weiter zu entwickeln, dass eine verbesserte Befestigung der Rollen an dem Deck ermöglicht wird.

Die Erfindung löst diese Aufgabe mit den Merkmalen des Anspruches 1, insbesondere mit denen des Kennzeichenteils, und ist demgemäß dadurch gekennzeichnet, dass sich von der Unterseite des Decks wenigstens ein Gehäuse für eine Rolle weg erstreckt, das ein Lager zur Halterung der Rolle ausbildet, und das die Rolle im montierten Zustand zumindest teilweise überfängt.

Das Prinzip der Erfindung besteht im wesentlichen darin, dass wenigstens einer Rolle, vorzugsweise mehreren Rollen, ein Gehäuse zugeordnet wird. Das Gehäuse erstreckt sich von der Unterseite des Decks nach unten hin weg. Das Gehäuse kann vorteilhaft aus Kunststoff bestehen und weiter vorteilhaft bei der Herstellung des Decks, also bei der Herstellung des aus Kunststoff bestehenden Ladungsträgers, mit angespritzt sein.

Das Gehäuse kann einen Unterbringungsraum für die Rolle bereitstellen, und die Rolle überfangen oder übergreifen und die Rolle geschützt, oder zumindest teilweise geschützt, unterbringen. Hierdurch kann in bestimmten Gebrauchssituationen die Rolle vor einer Beschädigung von außen geschützt werden.

Erfindungsgemäß dient das Gehäuse aber in erster Linie dazu, ein Lager zur Halterung der Rolle auszubilden. Beispielsweise kann das Lager ein Drehlager bereitstellen, und z. B. zwei einander gegenüberliegende Lageraugen umfassen, durch die hindurch ein Bolzen gesteckt werden kann, der auch die Rolle durchsteckt. Hierdurch kann die Montage der Rolle an dem Ladungsträger erheblich vereinfacht werden. Schließlich wird auch eine preiswertere Fertigung möglich. Erfindungsgemäß kann durch eine entsprechend geschickte und optimierte Konstruktion des Gehäuses eine ausreichende Stabilität für die Halterung der Rolle von dem Ladungsträger geschaffen werden.

Insbesondere zur Festlegung einer nichtlenkbaren oder feststehenden Rolle an dem Ladungsträger genügt es demnach z. B., wenn ein Bolzen die Lageraugen und die Rolle durchsteckt und der Bolzen beidseitig - endseitig - verschraubt wird.

Das Gehäuse kann eine oder mehrere Wände umfassen. Vorteilhafterweise umfasst das Gehäuse zumindest zwei zueinander parallele Wände.

Besonders vorteilhaft überfängt das Gehäuse mit seinen Wänden die Rolle allseitig oder wenigstens entlang der Hälfte ihrer Höhe. Die Rolle schaut also im montierten Zustand nach unten hin aus dem Gehäuse heraus.

Von der Erfindung ist auch umfasst, wenn das Gehäuse die Rolle nur entlang einer Seite oder entlang zwei Seiten teilweise überfängt. Vorteilhafterweise umfängt das Gehäuse die Rolle im montierten Zustand allseitig, so dass eine Art Käfig für die Rolle gebildet wird.

Gemäß einer vorteilhaften Ausgestaltung der Erfindung weist das Gehäuse zumindest zwei zueinander parallel ausgerichtete Wandabschnitte auf. Diese sind jeweils entlang einer Ebene ausgerichtet, zu denen eine Drehachse der Rolle einen Normalenvektor bereitstellt. Die Wände sind also so ausgebildet, dass sie zwischen sich die Rolle einfangen können. Zur Befestigung der Rolle kann ein Bolzen die Rolle und die beiden Wände entlang den Lageraugen durchstecken. Hierdurch wird eine stabile Konstruktion ermöglicht.

Gemäß einer weiteren vorteilhaften Ausgestaltung der Erfindung umgibt das Gehäuse die Rolle allseitig, insbesondere derart, dass die Rolle nur nach unten hin aus dem Gehäuse herausragt. Dies ermöglicht eine besonders stabile Konstruktion und einen besonders guten Schutz der Rolle vor Beschädigungen.

Gemäß einer vorteilhaften Ausgestaltung der Erfindung weist das Gehäuse eine hohlkammernartige Struktur mit Hohlkammer und/oder eine wabenartige Struktur auf. Hierdurch kann bei nur geringem Gewicht und einem reduzierten und optimierten Materialeinsatz eine sehr stabile Konstruktion erreicht werden.

Gemäß einer weiteren vorteilhaften Ausgestaltung der Erfindung ist das Gehäuse an das Deck mit angespritzt. Im Zuge der Herstellung des Ladungsträgers aus Kunststoff wird das Gehäuse mit angespritzt. Damit wird eine optimierte einfache Fertigung des Ladungsträgers möglich.

Gemäß einer weiteren vorteilhaften Ausgestaltung der Erfindung umfasst das Gehäuse wenigstens eine Aufnahmekammer für ein Befestigungselement zur Festlegung der Rolle, welche insbesondere eine Einrichtung zur Drehverhinderung des Befestigungselementes umfasst. Das Befestigungselement kann z. B. eine Schraubmutter sein, die Werkzeugangriffsflächen aufweist, und z. B. Hexagon-förmig oder sechseckartig ausgebildet ist, wie dies bei herkömmlichen Muttern der Fall ist. Die Aufnahmekammer kann dazu ausgebildet sein, ein Befestigungselement mit Hexagon-förmigen Werkzeugflächen drehfest aufzunehmen. Hierdurch kann ein Festschrauben eines zweiten Befestigungselementes an dem gegenüberliegenden Ende des Bolzens besonders erleichtert ermöglicht werden.

Gemäß einer weiteren vorteilhaften Ausgestaltung der Erfindung stellt das Gehäuse wenigstens ein Lagerauge für einen Bolzen zur Festlegung der Rolle bereit. Der Bolzen bildet dabei eine Drehachse der Rolle aus. Das Lagerauge ist eine Öffnung in einer Wand des Gehäuses, die ein Durchstecken oder ein Durchgreifen eines Bolzens zulässt. Hierdurch wird eine besonders stabile Konstruktion ermöglicht.

Gemäß einer weiteren vorteilhaften Ausgestaltung der Erfindung ist das Gehäuse zur Drehhalterung einer feststehenden Rolle ausgebildet. Dies ermöglicht eine einfache Montage einer feststehenden Rolle an einem Ladungsträger.

Gemäß einer weiteren vorteilhaften Ausgestaltung der Erfindung weist der Ladungsträger eine randseitige Ausnehmung zur Ermöglichung eines Zugangs zu einem Hebel an einer lenkbaren Rolle auf. Dies ermöglicht eine besonders einfache Konstruktion eines Ladungsträgers, der einen verbesserten Zugang zu einem Feststell- oder Bremshebel einer lenkbaren Rolle ermöglicht.

Gemäß einer weiteren vorteilhaften Ausgestaltung der Erfindung weist der Ladungsträger Abmessungen auf, nämlich eine Länge und eine Breite, die den Abmessungen eines herkömmlichen Ladungsträgers entsprechen. Angemerkt sei, dass auch die Höhe eines Ladungsträgers gemäß der Erfindung der Höhe eines herkömmlichen Ladungsträgers entsprechen kann.

Gemäß einer vorteilhaften Ausgestaltung der Erfindung weist der Ladungsträger Abmessungen auf, die den Abmessungen einer Viertelpalette entsprechen. Alternativ können die Abmessungen des erfindungsgemäßen Ladungsträgers auch den Abmessungen einer Halbpalette oder einer anderen, insbesondere standardisierten Abmessung eines herkömmlichen Ladungsträgers entsprechen.

Schließlich kommen auch andere genormte Abmessungen in Betracht, so dass der erfindungsgemäße Ladungsträger ggf. gut in bestehende Logistikkonzepte und -Systeme integrierbar ist.

Gemäß einer weiteren vorteilhaften Ausgestaltung der Erfindung ist das Deck durchgehend oder im wesentlichen durchgehend ausgebildet. Das Deck erstreckt sich durchgehend entlang einer Länge und entlang einer Breite des Ladungsträgers. Ausgenommen von der durchgehenden Ausbildung des Ladungsträgers sind Versteifungstrukturen des Decks und/oder funktionale Flächen, z. B. Befestigungsflächen, Befestigungsschlitze, taschenartige Aufnahmen für Rollen einer auf dem Ladungsträger gestapelten Rolle, etc.

Als funktionale Fläche werden auch Befestigungsöffnungen oder Rücksprünge oder Ausnehmungen oder Erhebungen oder Noppen oder dergleichen bezeichnet.

Bei dieser Ausführungsform ist der Ladungsträger z. B. nach Art einer herkömmlichen Viertelpalette ausgebildet. Insbesondere können identische oder ähnliche Schnittstellen und Befestigungsflächen wie bei einem Ladungsträger des Standes der Technik vorgesehen sein.

So können beispielsweise nach innen versetzte Ecken vorgesehen sein, die ein Überstülpen von Display-Sockelfortsätzen ermöglichen.

Auch können entlang der Schmalseiten und/oder entlang der Längsseiten des Ladungsträgers, z. B. jeweils mittig an einer entsprechenden Seite angeordnet, Aufnahmen vorgesehen sein, die eine Befestigung von Display-Sockelfortsätzen ermöglichen. Zur Vermeidung von Wiederholungen wird verwiesen auf die deutsche Patentanmeldung DE 10 2011 003 999 A1 der Anmelderin, deren Inhalt hiermit vollständig in den Inhalt der vorliegenden Anmeldung mit eingeschlossen wird, dies auch zum Zwecke, die Merkmale aus dieser Patentanmeldung in die Ansprüche der vorliegenden Patentanmeldung mit aufzunehmen.

Gemäß einer alternativen Ausgestaltung der Erfindung ist der Ladungsträger rahmenartig ausgebildet, wobei das Deck eine zentrale Öffnung umrandet. Ein solcher rahmenartig ausgebildeter Ladungsträger weist eine Auflagefläche auf, auf der eine Einrichtung zur Aufnahme von Gütern aufgesetzt werden kann. Eine solche Einrichtung zur Aufnahme von Gütern kann beispielsweise eine herkömmliche Viertelpalette sein, oder ein Displaysockel, oder eine Kiste, oder ein Karton, eine Gitterbox, ein Container oder dergleichen.

Gemäß einer weiteren vorteilhaften Ausgestaltung der Erfindung weist der Ladungsträger vier Rollen auf. Gemäß dieser Ausgestaltung der Erfindung kann auf herkömmliche Bauformen von Ladungsträgern zurückgegriffen werden.

Gemäß einer weiteren vorteilhaften Ausgestaltung der Erfindung weist der Ladungsträger zwei feststehende Rollen und zwei lenkbare Rollen auf. Dies ermöglicht ebenfalls eine Anlehnung an Konstruktionen herkömmlicher Ladungsträger.

Gemäß einer weiteren vorteilhaften Ausgestaltung der Erfindung sind die Rollen in Eckbereichen des Ladungsträgers angeordnet. Dies ermöglicht eine besonders stabile Konstruktion.

Gemäß einer weiteren vorteilhaften Ausgestaltung der Erfindung ist die Ausnehmung nahe einer Ecke des Ladungsträgers angeordnet. Dies ermöglicht eine verbesserte Zugänglichkeit eines Hebels einer lenkbaren Rolle, ohne die wesentlichen Funktionen des Ladungsträgers nachteilig zu beeinflussen.

Gemäß einer weiteren vorteilhaften Ausgestaltung der Erfindung ist der Ladungsträger stapelbar ausgebildet. Hierzu kann insbesondere vorgesehen sein, dass an der Auflagefläche des Ladungsträgers taschenartige Aufnahmen vorgesehen sind. Die taschenartigen Aufnahmen dienen der Aufnahme der Rollen eines benachbart angeordneten Ladungsträgers bei gestapelter Anordnung.

Hierdurch kann eine komprimierte Stapelung erreicht werden. Zugleich kann verhindert werden, dass bei gestapelter Anordnung mehrerer Ladungsträger übereinander eine unbeabsichtigte Relativbewegung der Ladungsträger eintritt.

Gemäß einer weiteren vorteilhaften Ausgestaltung der Erfindung ist der Ladungsträger dadurch gekennzeichnet, dass an der Auflagefläche des Ladungsträgers taschenartige Aufnahmen für Rollen eines gestapelt, oberhalb des Ladungsträgers angeordneten, weiteren Ladungsträgers vorgesehen sind.

Die Erfindung bezieht sich gemäß einem weiteren Aspekt auf eine Vorrichtung zur Warenpräsentation im Einzelhandel.

Insbesondere bezieht sich die Erfindung auf eine Vorrichtung nach Art eines Displays.

Als Display, oder als Vorrichtung zur Warenpräsentation, werden Vorrichtungen bezeichnet, die z. B. Aktionsware im Einzelhandel präsentieren und für einen Verkauf bereitstellen. Derartige Waren werden häufig auf Viertelpaletten, ggf. auch auf Halbpaletten, transportiert.

Eine solche Vorrichtung besitzt das Erfordernis, dass die Vorrichtung häufig umzustellen ist, beispielsweise, weil geänderte Präsentationen in den Verkaufsräumen zu verschiedenen Zeitpunkten eine Anpassung erfordern.

Gerade hier kommt es auf eine komfortable Bedienung an.

Die Erfindung schlägt hierzu eine Vorrichtung zur Warenpräsentation vor, die einen Ladungsträger nach einem der vorgenannten Ansprüche einsetzt.

Damit kann ein Warendisplay auf einfache Weise umgesetzt oder transportiert werden.

Die Verwendung eines erfindungsgemäßen Ladungsträgers bei einem solchen Warendisplay schützt dabei die in dem Gehäuse untergebrachte Rolle vor Beschädigungen.

Insbesondere ist gemäß der Erfindung vorgesehen, dass das Gehäuse für die Rolle über die vorgegebenen Abmessungen des Ladungsträgers, z. B. die Abmessungen einer Viertelpalette, nicht nach außen hinaus ragt. Der Einsatz und die Verwendung des erfindungsgemäßen Ladungsträgers wird also durch das erfindungsgemäß vorgesehene Gehäuse nicht beeinträchtigt.

Weitere Vorteile der Erfindung ergeben sich aus den nicht zitierten Unteransprüchen, sowie anhand der in den Zeichnungen dargestellten Ausführungsbeispiele der Erfindung. Darin zeigen:
- Fig. 1: ein Ausführungsbeispiel eines erfindungsgemäßen Ladungsträgers in einer perspektivischen Ansicht,
- Fig. 2: den Ladungsträger der Fig. 1 in einer Unteransicht gemäß Ansichtspfeil II in Fig. 1, ebenfalls in perspektivischer Betrachtung,
- Fig. 3: einen Eckbereich des Ladungsträgers der Fig. 2, etwa gemäß Teilkreis III in Fig. 2, in vergrößerter Darstellung, zur Veranschaulichung des Gehäuses für eine feststehende Rolle,
- Fig. 4: den Ladungsträger der Fig. 2 in einer geänderten perspektivischen Ansicht, etwa gemäß Ansichtspfeil IV in Fig. 2,
- Fig. 5: den in Fig. 4 mit dem Teilkreis V bezeichneten Eckbereich des Ladungsträgers der Fig. 4 in vergrößerter Darstellung, und
- Fig. 6: den Ladungsträger der Fig. 1 in einer Längsseitenansicht, etwa entlang Ansichtspfeil VI in Fig. 1.

Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug zu einem Ausführungsbeispiel beschrieben, dargestellt oder offenbart sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Alle offenbarten Merkmale sind für sich erfindungswesentlich. In die Offenbarung der Anmeldung wird hiermit auch der Offenbarungsinhalt der zugehörigen Prioritätsunterlagen (Abschrift der Voranmeldung) sowie der zitierten Druckschriften und der beschriebenen Vorrichtungen des Standes der Technik inhaltlich vollumfänglich mit einbezogen, auch zu dem Zweck, einzelne oder mehrere Merkmale der dort offenbarten Gegenstände in einen oder in mehrere Ansprüche der vorliegenden Anmeldung mit aufzunehmen. Auch solche geänderten Ausführungsbeispiele sind - auch wenn sie in den Zeichnungen nicht dargestellt sind - von der Erfindung mit umfasst.

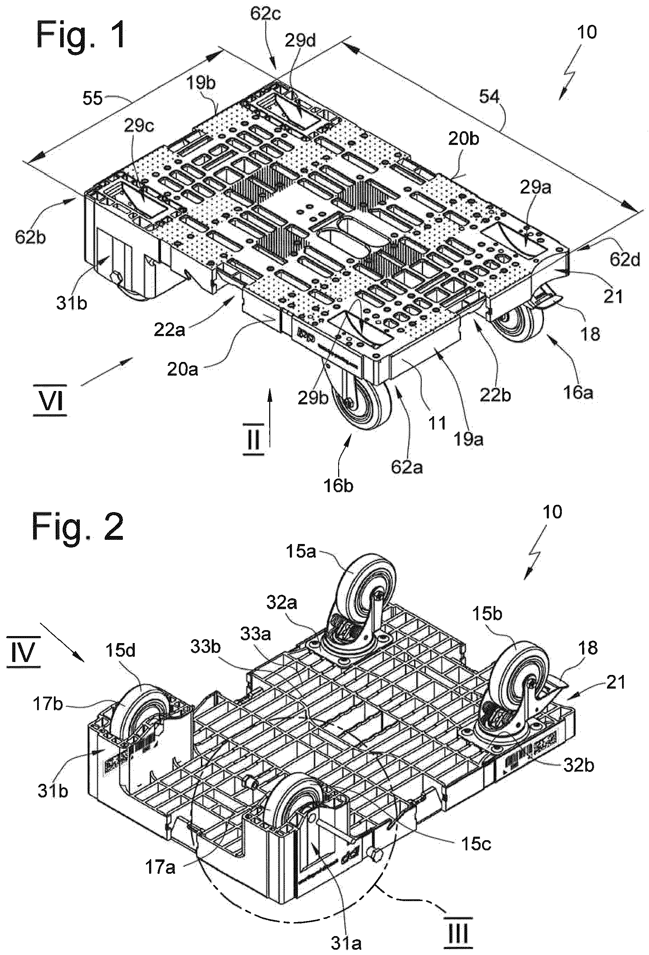

Ein erstes Ausführungsbeispiel eines erfindungsgemäßen und in seiner Gesamtheit in den Zeichnungen mit 10 bezeichneten Ladungsträgers ist in Fig. 1 dargestellt. Der Ladungsträger ist im wesentlichen rechteckförmig ausgebildet und umfasst eine Länge 54 und eine Breite 55. Bei dem Ausführungsbeispiel der Fig. 1 entsprechen die Abmessungen 54, 55 des Ladungsträgers 10 den Abmessungen einer herkömmlichen Viertelpalette. Die Länge 54 beträgt dann 60 cm und die Breite 55 beträgt 40 cm.

Von der Erfindung sind auch andere, nicht dargestellte Ladungsträger mit anderen Abmessungen umfasst. Insbesondere können andere Ausführungsbeispiele der Erfindung als Halbpalette ausgebildet sein.

Bei dem Ausführungsbeispiel der Fig. 1 weist der Ladungsträger 10 ein Deck 11 auf, das eine Oberseite 12 und eine Unterseite 14 bereitstellt. Die Oberseite bildet bei dem Ausführungsbeispiel der Fig. 1 eine Auflagefläche 13 für Güter aus. Beispielsweise kann der Ladungsträger 10 der erfindungsgemäßen Art als Unterbau für ein Warendisplay eingesetzt werden. Bei einem Warendisplay handelt es sich um eine Vorrichtung zur Präsentation und zur Aufbewahrung von Waren, die z. B. für Aktionsware, z. B. im Einzelhandel, eingesetzt werden kann. Beispielsweise kann auf dem Ladungsträger der Fig. 1 ein Kartonagedisplaysockel und darauf angeordnet Kartonagentrays mit zum Abverkauf vorgesehenen Waren angeordnet werden.

Die Ausführungsbeispiele in den Figuren zeigen den Ladungsträger 10 der erfindungsgemäßen Art, der jeweils vier Rollen 15a, 15b, 15c, 15d aufweist. Davon sind zwei Rollen 16a, 16b als lenkbare Rollen vorgesehen, die über einen Betätigungs- oder Bremshebel 18 feststellbar sind. Die beiden anderen Rollen 17a, 17b werden als feststehende Rollen bezeichnet, da sie nicht lenkbar sind.

Der Ladungsträger 10 ist noch Art einer rollbaren Palette ausgebildet und weist eine Schmalseite 19a, 19b und eine Längsseite 20a, 20b auf. Jeweils mittig an jeder der Schmalseiten 19a, 19b und an jeder der Längsseiten 20a, 20b sind Befestigungsöffnungen 22a, 22b zur Festlegung von Fortsätzen von Kartonagedisplaysockeln angeordnet.

Hierzu wird verwiesen auf die eingangs erwähnte DE 10 2011 003 999 A1 der Anmelderin, deren Inhalt hiermit in den Inhalt der vorliegenden Patentanmeldung mit eingeschlossen wird.

An der Schmalseite 19a ist nahe des Eckbereiches 62d des Ladungsträgers 10 eine Ausnehmung 21 mit einer bogenförmigen Kontur angeordnet, die einen verbesserten Zugang zu dem mit dem Fuß betätigbaren Bremshebel 18 bietet.

An der Oberseite 12 des Decks 11 sind Aufnahmetaschen 29a, 29b, 29c, 29d zur Aufnahme von Rollen eines auf der Auflagefläche 13 angeordneten, gestapelten, weiteren, nicht dargestellten Ladungsträgers vorgesehen.

Die erfindungsgemäße Besonderheit besteht in einem Kunststoffgehäuse 31, das ein Lager zur Halterung einer Rolle 17a, 17b ausbildet.

Fig. 2 zeigt, dass die lenkbaren Rollen 16a, 16b unter Zuhilfenahme von Befestigungsplatten 32a, 32b unmittelbar an der Unterseite 14 des Decks 11 angeschraubt werden. Hierbei handelt es sich um eine herkömmliche Befestigungsart.

Die Unterseite 14 des Decks 11 weist Versteifungsstrukturen auf. Lediglich beispielhaft sind zwei Versteifungsstreben 33a, 33b in Fig. 2 angedeutet. Im Bereich der Befestigungsplatten 32a, 32b kann die Unterseite 14 des Decks 11 bzw. das Deck 11 besonders stabile Strukturen zur Schraubenaufnahme aufweisen.

Die Befestigung der lenkbaren Rollen an den Befestigungsplatten 32a, 32b ist etwas mühselig. Auch sind die lenkbaren Rollen gemäß Fig. 2 nicht geschützt untergebracht.

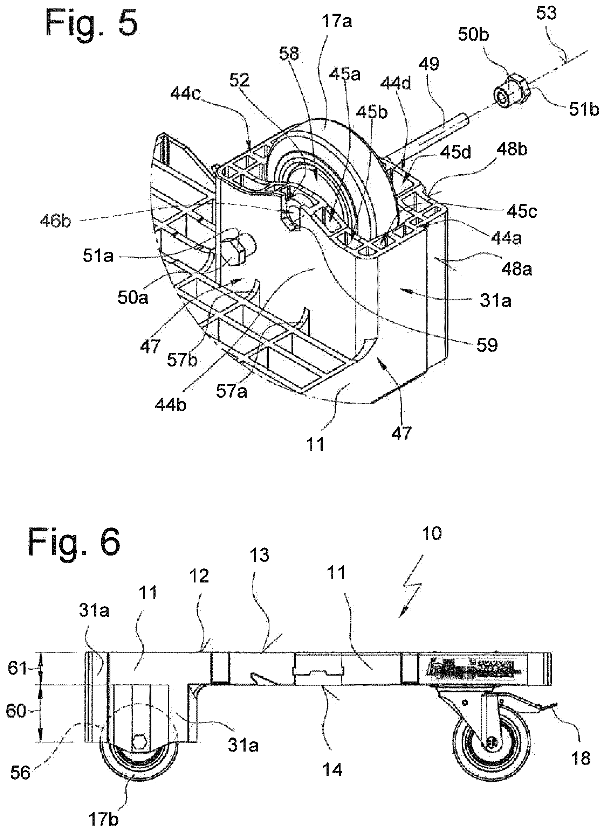

Die erfindungsgemäße Besonderheit sieht, wie z. B. in Fig. 2 ersichtlich, vor, dass sich von der Unterseite 14 des Decks 11, einstückig stoffschlüssig an das Deck 11 angebunden, Kunststoffgehäuse 31a, 31b weg erstrecken. Diese bilden einen insbesondere käfigartigen Aufnahmeraum für die Rollen 17a, 17b, aus dem die Rollen 17a, 17b im montierten Zustand nur geringfügig herausragen (vgl. Fig. 6).

Der in Fig. 6 mit dem Bezugszeichen 56 bezeichnete, strichliniert dargestellte Abschnitt der Rolle 17b wird von den Gehäuse 31a überfangen.

Das Gehäuse 31 ist bei der Herstellung des aus Kunststoff bestehenden Ladungsträgers einstückig-stoffschlüssig mit angeformt oder mit angespritzt worden. In Fig. 5 sind die Anbindungsbereiche, entlang derer das Gehäuse 31a an das Deck 11 angebunden ist, mit 47 bezeichnet. Man erkennt, dass die Anbindungsbereiche 47 gekrümmt ausgebildete Übergangsbereiche 57a, 57b umfassen, um hier eine Kraftoptimierung zu erreichen, und Spannungsspitzen zu vermeiden.

Anhand der Fig. 5 wird erläutert, dass das Gehäuse 31a vier Wände 44a, 44b, 44c, 44d aufweist.

Die Wände 44b und 44d sind parallel zueinander ausgerichtet, und die Wände 44a und 44c sind parallel zueinander ausgerichtet. Die vier Wände 44a, 44b, 44c, 44d umgeben die Rolle 17a insgesamt allseitig.

Die Wände 44b und 44d erstrecken sich jeweils entlang einer Ebene, deren Normalenvektor von der geometrischen Drehachse 53 der Rolle 17a im montierten Zustand gebildet ist.

Die Wände 44a, 44b, 44c, 44d weisen jeweils Hohlkammern 45a, 45b, 45c, 45d auf, wodurch eine äußerst stabile aber leichtbauende Konstruktion bei optimiertem Materialeinsatz erreicht wird. In den Wänden 44b und 44d ist jeweils ein Lagerauge 46a, 46b angeordnet, das von einem Bolzen 49 durchsteckt werden kann. Die Wände 44b und 44d bilden insoweit ein Lager zur Halterung der Rolle 17a aus.

Die Figuren 2, 3, 4 und 5 illustrieren schematisch einen Vormontagezustand, wobei Befestigungselemente in Form von Schraubmuttern 50a, 50b und der Bolzen 49 noch nicht montiert in einer Explosionsdarstellung dargestellt sind.

Zur Montage wird zunächst die Rolle 17a in die entsprechende Aufnahme 58 für die Rolle 17 an dem Gehäuse 31 eingesetzt. Sodann wird der Bolzen 49 durch ein erstes der beiden Lageraugen 46a, 46b, sodann eine nicht dargestellte zentrale Öffnung in der Rolle 17a und sodann durch das andere der beiden Lageraugen 46a, 46b durchsteckt. Jeweils an seinen freien beiden Enden weist der Bolzen 49 nicht dargestellte Außengewinde auf.

Nach dem Einstecken des Bolzens können die beiden Schraubelemente 50a, 50b auf den Bolzen aufgeschraubt werden.

Dabei ist anzumerken, dass jedes der beiden Schraubelemente 50a, 50b einen Schraubkopf 51a, 51b aufweist, der Werkzeugangriffsflächen aufweist. Bei dem Ausführungsbeispiel der Figuren sind die Werkzeugangriffsflächen so ausgebildet, dass der Schraubkopf hexagonförmig oder sechseckförmig ausgebildet ist.

An der Gehäusewand 44b des Gehäuses 31a gemäß Fig. 5 ist eine Aufnahme 52 für das Schraubelement 50a vorgesehen. Diese Aufnahme 52 weist Halteflächen 59 auf, die mit den Werkzeugangriffsflächen des Schraubkopfs 51a kooperieren können, und zu diesem komplementär ausgebildet sind, und so für einen Drehschluss sorgen.

Es genügt daher ein Festschrauben der Mutter 50b auf der Außenseite, so dass es auf der Innenseite, im Bereich der Wand 44b, zu einem Drehschluss kommt, so dass nur die Mutter 50b mit einem Werkzeug gedreht werden muss.

Das Gehäuse 31a, 31b erstreckt sich, wie ausweislich Fig. 6 ersichtlich, vertikal von der Unterseite 14 des Decks 11 etwa bis an oder etwa über die Hälfte der Höhe oder des Durchmessers der Rolle nach unten.

Bei dem Ausführungsbeispiel der Fig. 6 ist die Höhe 60 des Gehäuses 31a etwa 1,5 bis 3 mal so groß, wie die Höhe 61 des Decks 11.

Wie sich insbesondere aus Fig. 1 ergibt, sind die Eckbereiche 62a, 62b, 62c, 62d mit zurückspringenden Ecken ausgestattet, wie dies beispielsweise in der DE 10 2011 003 999 A1 beschrieben sind. Die zurückspringenden Ecken dienen der Aufnahme und der Anlage von Kartonagefortsätzen an den Ecken des Kartonagedisplaysockels.

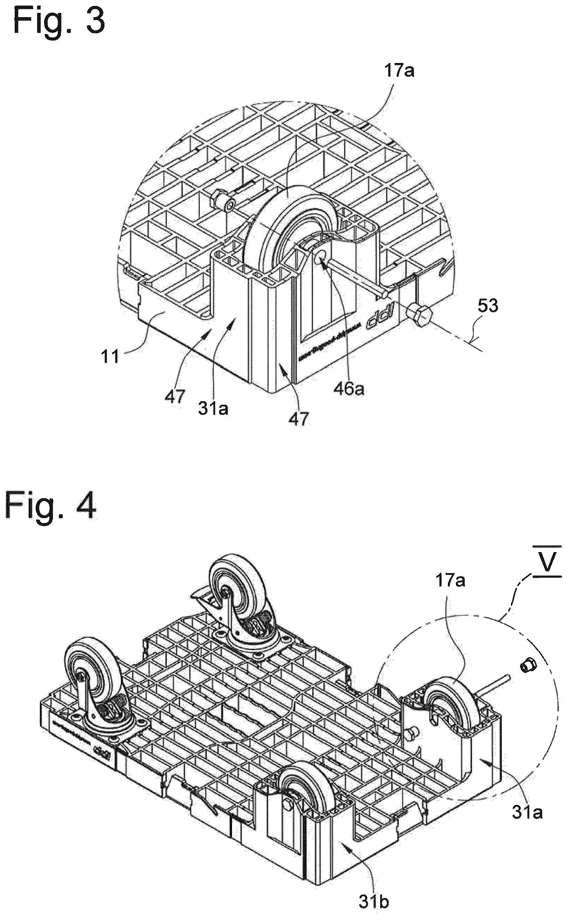

Wie sich insbesondere aus den Darstellungen der Fig. 5 und 3 ergibt, setzen sich diese zurückspringenden Ecken mit ihrer Kontur entlang des Gehäuses 31a, 31b, fort. Das Gehäuse 31a, 31b weist somit Anlageflächen 48a, 48b für Displayfortsätze eines nicht dargestellten Displaysockels auf.

Anhand der Ausführungsbeispiele wurde beschrieben, dass erfindungsgemäß an dem Ladungsträger 10 ein Gehäuse 31a, 31b zur Montage und zur geschützten Unterbringung der feststehenden Rollen 17a, 17b vorgesehen ist. Von der Erfindung sind auch Ladungsträger umfasst, die in den Figuren nicht dargestellt sind, bei denen auch die lenkbaren Rollen in einem an das Deck einstückig-stoffschlüssig angebundenen Kunststoffgehäuse geschützt oder teilweise geschützt untergebracht sind, und an dem Kunststoffgehäuse festgelegt werden können.

## Patentansprüche

1. Ladungsträger (10) zum Transport und/oder zur Aufbewahrung von Gütern, insbesondere in Form einer Dolly, umfassend ein aus Kunststoff bestehendes Deck (11), an dessen Oberseite (12) eine Auflagefläche (13) für die Güter oder für eine Einrichtung zur Aufnahme der Güter bereitgestellt ist, und an dessen Unterseite (14) eine Mehrzahl von Rollen (15a, 15b, 15c, 15d) angeordnet ist, **dadurch gekennzeichnet, dass** sich von der Unterseite (14) des Decks (11) wenigstens ein Gehäuse (31a, 31b) für eine Rolle (17a, 17b) weg erstreckt, das ein Lager (46a, 46b) zur Halterung der Rolle (17a, 17b) ausbildet, und das die Rolle (17a, 17b) im montierten Zustand zumindest teilweise überfängt.

2. Ladungsträger nach Anspruch 1, **dadurch gekennzeichnet, dass** das Gehäuse (31a, 31b) zumindest zwei zueinander parallel ausgerichtete Wandabschnitte (44b, 44d) aufweist, die jeweils entlang einer Ebene ausgerichtet sind, zu denen eine Drehachse (53) der Rolle (17a, 17b) einen Normalenvektor bereitstellt.

3. Ladungsträger nach Anspruch 1 oder 2, **dadurch gekennzeichnet, dass** das Gehäuse (31a, 31b) die Rolle (17a, 17b) allseitig umgibt, insbesondere derart, dass die Rolle nur nach unten hin aus dem Gehäuse herausragt.

4. Ladungsträger nach einem der vorangegangenen Ansprüche, **dadurch gekennzeichnet, dass** das Gehäuse (31a, 31b) eine Struktur mit Hohlkammern (45a, 45b) und/oder eine wabenartige Struktur aufweist.

5. Ladungsträger nach einem der vorangegangenen Ansprüche, **dadurch gekennzeichnet, dass** das Gehäuse (31a, 31b) einstückig-stoffschlüssig mit dem Deck (11) verbunden ist.

6. Ladungsträger nach einem der vorangegangenen Ansprüche, **dadurch gekennzeichnet, dass** das Gehäuse (31a, 31b) an das Deck (11) mit angespritzt ist.

7. Ladungsträger nach einem der vorangegangenen Ansprüche, **dadurch gekennzeichnet, dass** das Gehäuse (31a, 31b) wenigstens eine Aufnahmekammer (52) für ein Befestigungselement (50a, 50b) zur Festlegung der Rollen aufweist, welche insbesondere eine Einrichtung (59) zur Drehverhinderung des Befestigungselementes (50a, 50b) umfasst.

8. Ladungsträger nach einem der vorangegangenen Ansprüche, **dadurch gekennzeichnet, dass** das Gehäuse (31a, 31b) wenigstens ein Lagerauge (46a, 46b) für einen Bolzen (49) zur Festlegung der Rollen bereitstellt, wobei der Bolzen (49) insbesondere eine Drehachse (53) der Rolle bereitstellt.

9. Ladungsträger nach einem der vorangegangenen Ansprüche, **dadurch gekennzeichnet, dass** das Gehäuse (31a, 31b) zur Drehhalterung einer feststehenden Rolle (17a, 17b) ausgebildet ist.

10. Ladungsträger nach einem der vorangegangenen Ansprüche, **dadurch gekennzeichnet, dass** der Ladungsträger (10) eine randseitige Ausnehmung (21) zur Ermöglichung eines Zugangs zu einem Hebel (10) an einer lenkbaren Rolle aufweist,

11. Ladungsträger nach einem der vorangegangenen Ansprüche, **dadurch gekennzeichnet, dass** der Ladungsträger (10) Abmessungen (54, 55) aufweist, nämlich eine Länge (54) und eine Breite (55), die den Abmessungen eines herkömmlichen Ladungsträgers entsprechen.

12. Ladungsträger nach einem der vorangegangenen Ansprüche, **dadurch gekennzeichnet, dass** der Ladungsträger (10) Abmessungen, nämlich eine Länge (54) und eine Breite (55), einer Viertelpalette aufweist.

13. Ladungsträger nach einem der vorangegangenen Ansprüche, **dadurch gekennzeichnet, dass** das Deck (11) entlang einer Länge (54) und entlang einer Breite (55) des Ladungsträgers (10), mit Ausnahme von Versteifungsstrukturen oder funktionalen Flächen, im Wesentlichen durchgehend ausgebildet ist.

14. Ladungsträger nach einem der vorangegangenen Ansprüche, **dadurch gekennzeichnet, dass** die Oberseite (12) des Decks als durchgehende oder im Wesentlichen durchgehende Auflagefläche (19) für die Güter ausgebildet ist und sich entlang einer Länge (54) und entlang einer Breite (55) des Ladungsträgers erstreckt.

15. Vorrichtung zur Warenpräsentation im Einzelhandel, insbesondere nach Art eines Displays, umfassend einen Ladungsträger (10) nach einem der vorangehenden Ansprüche.
